# EUROPEAN PATENT APPLICATION

(11) **EP 0 661 641 A2**
(43) Date of publication of application: **05.07.1995**
(21) Application number: 94309581.0
(22) Date of filing: 20.12.1994
(51) Int. Cl.: G06F 12/08

(54) **A computer system**

(30) Priority: 30.12.1993 US 176398
(71) Applicant: International Business Machines Corporation, Armonk, N.Y. 10504 (US)
(72) Inventor: Chan, Fu Lam, Boynton Beach, Florida 33437 (US); Hernandez, Luis Antonio, Delray Beach, Florida 33445 (US); Lacroix, Nesly, Cypress, Texas, 77429 (US); Lenta, Jorge Eduardo, Boca Raton, Florida, 33486 (US); Riley, Dwight Delano, Ft. Lauderdale, Florida, 33326 (US); Tashakori, Esmaeil, Boca Raton, Florida, 33498 (US)
(74) Representative: Davies, Simon Robert

(57) **Abstract**

Disclosed is a computer system comprising a store in cache having a direct slave interface for eliminating cache data cast out to the main memory. The cache is operative to directly transfer data from a memory location in the cache to a local bus master or an input/output bus master during a read snoop hit cycle. The cache is further operative to invalidate data at a memory location in the cache without casting out the data to the main memory during a write snoop hit cycle. In one embodiment, the cache can be a part of a bus interface controller and coupled directly to a local bus and an input/output bus for selectively communicating with one of the bus masters. In an alternative embodiment, the cache can be an L1 CPU cache or an L2 cache directly coupled to the local bus.

## Description

This invention relates to a computer system in which performance is enhanced using a cache memory.

Modern high speed electronic data processing systems often comprise a processor or CPU and a hierarchical memory system including a high capacity relatively low speed main memory whose cycle time is much larger than the cycle time of the processor and a relatively low capacity high speed memory, conventionally known as a cache, which has a memory cycle time comparable to the cycle time of the processor. Such cache memory systems are well known in the art for reducing effective memory access time at a more or less reasonable cost.

The purpose of a cache is to increase the CPU's operating speed by reducing the number of times that the CPU has to access main memory for data and instructions. When information is required by the CPU, it is read from the main memory, provided to the processor and written into the cache memory. If the same information is required subsequently by the processor, it may be read directly from the cache memory to avoid the time delay which would normally be encountered when reading the main memory.

There are several cache levels in current hierarchical memory systems. For example, most high speed microprocessors (e.g., Intel 80486), have an internal or private cache (L1) in order to satisfy the increasing demands of application programs for more memory and faster operating speeds. In order to further reduce the access time when the data or instruction is not in the CPU's private cache, a second level cache (L2) is often used. The second level cache is external to the CPU, but supports much faster access times than the main memory.

There are two types of caches that are widely used in current computer systems. A store through (ST) (or write through) cache handles read and write operations differently. Data is written to the ST cache and the main memory regardless of whether the addressed line is in the cache or not. Consequently, the cache and the main memory are always in agreement. This guarantees that the main memory is kept current and will have the most up to date data. During a read hit the data is read from the ST cache without accessing the main memory. However, the disadvantage of a ST cache is that all writes, which usually average between ten and twenty percent of all references, are sent to main memory, requiring substantial main memory bandwidth to avoid significant performance degradation.

The store in (SI) (or write back) cache has been found to provide better system performance than a ST cache. In contrast to the ST cache, the SI cache treats read and write operations the same. If the line of data specified by an access address is present in the SI cache, the data will be read from or written into the cache only. Because all writes are made directly to the cache without updating main memory, the SI cache substantially reduces the main memory bandwidth needed by the CPU compared to a ST cache design.

A problem with a SI cache (L1 and L2) is that the current information is in the cache and not in the main memory. Consequently, when any other bus device other than the CPU attempts to access main memory the SI cache must cast out its data to the main memory before a read or write operation can be performed in order to maintain data integrity. For example, when a main memory read snoop hit occurs (cache detects that a bus master device is trying to read a location in main memory that only resides in the cache), the cache must first update the data in the main memory before the bus master device can read the main memory. The cache will cast out the line(s) of data corresponding to the address(es) supplied by the bus master.

When a main memory write snoop hit occurs (cache detects that a bus master device is trying to write to a location in main memory that already resides in the cache) the cache will also cast out the addressed line(s) of data to the main memory and invalidate the corresponding line(s) of data in the cache. Next, the bus controller will write over the up to date data in the main memory. The entire line of data in the cache must be cast out and invalidated even if the bus master is attempting to write to less than all 16 bytes of the line because the cache cannot determine which byte(s) of the line are being accessed.

For example, conventional caches (L1 and L2) can operate in the following manner. When an input/output (I/O) bus master initiates a read or a write cycle to a memory location which is in the cache (L1 or L2), the bus controller (main memory controller) will drive a control signal CHRDY inactive to indicate to the I/O bus master that the bus controller is not yet ready to complete the cycle. Next, the cache will drive a HITM control signal active which is received by the bus controller. HITM indicates to the bus controller that the cache has the up to date data and must transfer it to main memory before the operation can be performed. The cache will then cast out the line(s) of data to the main memory (and invalidate the corresponding line(s) of data in the cache for write cycles). After the cast out is completed, the bus controller will drive CHRDY active and then complete the cycle by sending the line(s) of data to the I/O bus master (read cycle) or writing new data in the main memory (write cycle).

When a local bus (LB) bus master initiates a read or write cycle to a memory location which is in the cache (L1 or L2), the cache will declare a hit while snooping. Next, the cache will drive HITM active which is input to the main memory controller to signal that a cast out must occur before the cycle can be processed. Subsequently, the bus controller will drive a BACKOFF signal to the LB bus master in order for the bus master to reinitiate the cycle after the cast out has been completed. The line(s) of data is then cast out to main memory and the bus master can then reinitiate the read or write cycle.

Since the cache must cast out its data during a main memory read snoop hit and a main memory write snoop hit before an I/O or LB master device can access main memory, system performance is substantially reduced. In addition, because the conventional SI caches require an extra step to update the cache data into the main memory before the bus master can access the data, Micro Channel data streaming can not be used. Thus, there is a need to develop a store in cache memory system which eliminates cache data cast out.

Accordingly, the present invention provides a computer system comprising: a local bus, an input/output bus, a microprocessor coupled to said local bus, a bus master device coupled to one of said input/output and said local buses, a main memory coupled to said local bus, a bus interface controller coupled directly to said local bus and directly to said input/output bus for providing communications between said local bus and said input/output bus, said bus interface controller including: a cache coupled directly to said local bus and to said input/output bus for selectively receiving address information from said buses and being operative to selectively communicate with said bus master device, said cache including means for directly transferring data from a memory location in said cache to said bus master device without casting out said data in response to a bus cycle driven by said bus master device to read the data from the corresponding memory location in said main memory.

An embodiment is directed to direct slave interface caches which eliminate data cast out to main memory during read snoop hit and write snoop hit cycles. The cache is part of a bus interface controller (BIC) and is coupled directly to a local processor bus and an input/output bus for receiving address information from the local and I/O buses and selectively communicating with one of a local bus (LB) master and an I/O bus master. The cache can include one or both of the following: (i) means for directly transferring data from a memory location in the cache to the local bus master or the I/O bus master during a read snoop hit cycle, and/or (ii) means for invalidating data at a memory location in the cache without casting out the data during a write snoop hit cycle initiated by the local bus master or the I/O bus master.

The cache of this embodiment includes a tag array, state array and memory array each of which is selectively coupled to an address supplied on the local bus by the local bus master or an address supplied on the input/output bus by the input/output bus master. A comparator is used to compare the address provided to the cache by the selected bus master to tags in the cache and generate a signal to indicate whether the address is in the cache. This signal is input to a local bus cache controller and an I/O cache controller.

When an I/O bus master gains control of the I/O bus and initiates a read cycle to a byte(s) in a main memory location, it will place the address of the byte(s) on the I/O bus in addition to control information indicating what type of operation (read, write, etc.) is to be performed at that address. While snooping the cache will detect this cycle. The I/O address will be multiplexed into the tag array, state array and the cache memory array. When the address is present in the cache a hit will be declared by the comparator. Since the address is presented directly to the cache memory array, the data (byte(s)) will be read out of the cache and provided directly to the I/O bus master.

During a write snoop hit cycle initiated by the I/O bus master, the I/O cache controller will generate control signals which are input to the state array. The control signals are used to invalidate the valid bits of the byte(s) corresponding to the selected address location in the cache without casting out the data to the main memory. Next, the bus interface controller will write the new data to main memory. The operation of the cache of the present invention when a local bus master (other than a CPU) is in control of the local bus is identical to that described above with regard to an I/O bus master.

In another embodiment of the present invention, the cache is an L1 internal CPU cache or an L2 cache directly coupled to the local bus. The L1 and L2 caches provide a direct slave interface during a read snoop hit cycle and/or a write snoop hit cycle. The L1 and L2 cache can include one or both of the following: (i) means for directly transferring data from a memory location in the cache to the local bus master or the I/O bus master during a read snoop hit cycle, and/or (ii) means for invalidating only the byte(s) in the cache that correspond to the addressed memory location(s) without casting out the data during a write snoop hit cycle initiated by the local bus master or the I/O bus master. During a read snoop hit cycle, the cache will (i) drive a control signal HITT to indicate that valid data is in the cache and prevent any other memory slaves from responding to the bus cycle, and (ii) drive a READY signal to terminate the read cycle.

The L1 and L2 caches of the present invention include all the elements of the BIC's cache except for the I/O interface. More specifically, the L1 and L2 caches include a tag array, state array and memory array each of which being coupled to an address supplied on the local bus by a local bus master or an input/output bus master. A comparator is used to compare the address provided to the cache by one of the bus masters to tags in the cache and generate an internal signal to indicate whether the address is in the cache. This signal is input to a local bus cache controller.

With regard to a bus cycle initiated by an I/O bus master to read data from a main memory location having an address, the I/O bus master will gain control of the I/O bus in accordance with the arbitration procedures of the BIC. The cache will detect this bus cycle while snooping. The comparator will compare the memory address with the tags in the tag array and declare a hit when the address is present in the cache. The cache controller will then drive the HITT signal in order to prevent any other memory slaves (L1 cache and BIC memory controller) from responding. The data will be placed on the local bus along with the READY signal. Next, the BIC will take the data and transfer it to the I/O bus master via the I/O bus.

If the I/O bus master is performing a write operation to a memory location having a corresponding address in the L1 or L2 cache, the local bus cache controller will drive control signals which will be received by the state array to invalidate the byte(s) in the L1 or L2 cache corresponding to the addressed main memory location(s). Next, the BIC will write the new data to main memory. No cache data cast out takes place during this cycle. The operation of the L1 or L2 cache of the present invention when a local bus master (other than the CPU) is in control of the local bus is identical to that described above with regard to an I/O bus master.

Thus, if the data in a main memory location addressed by a bus master (I/O or local bus master other than the CPU) is also present in any one of the caches of the present invention a read snoop hit occurs and the data is transferred (read) directly from the cache to the bus master without the need for the cache to first cast out the data to the main memory. If the bus master issues a write request and the byte(s) addressed is in the cache (write snoop hit), the cache will invalidate the byte(s) for that particular address location and the bus master can write directly to main memory without the need for the cache to first cast out the data to the main memory.

The direct slave interface caches of the present invention have the significant advantage over prior art SI caches in that the step to cast out data to main memory during a main memory read or write snoop hit is eliminated. By eliminating the extra cast out step, the caches of the present invention significantly increases the computer's operating speed and is fast enough to support Micro Channel data streaming.

Embodiments of the invention will now be described, by way of example only, with reference to the accompanying drawings in which:
fig, 1 is a perspective view of a personal computer embodying the present invention,
fig. 2 is an exploded perspective view of certain elements of the personal computer of Fig. 1 including a chassis, a cover, and a planar board and illustrating certain relationships among those elements,
fig. 3 is a schematic view of certain components of the personal computer of Figs. 1 and 2,
fig. 4 is a general block diagram of one embodiment of the direct slave interface cache of the present invention,
fig. 5 illustrates the control and directory organization of the direct slave interface cache of Fig. 4,
fig. 6 is a block diagram representation of the elements and connections of the direct slave interface cache of Fig. 4,
fig. 7 is a general block diagram of another embodiment of the direct slave interface cache of the present invention,
fig. 8 is a general block diagram of a further embodiment of the direct slave interface cache of the present invention, and
fig. 9 is a block diagram representation of the elements and connections of the direct slave interface caches of Figs. 7 and 8.

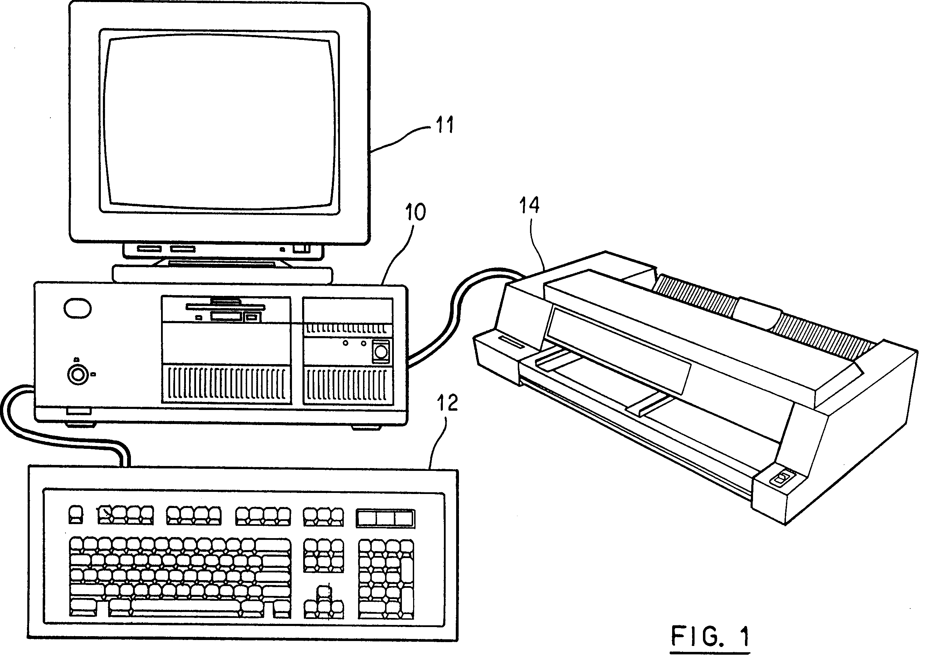

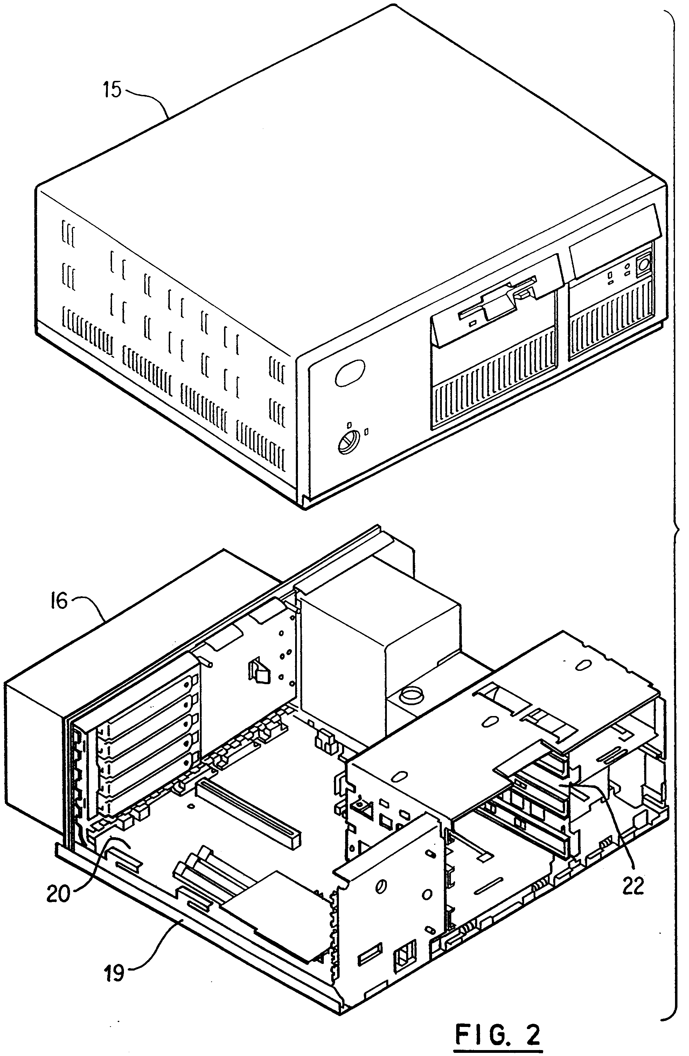

Referring to figure 1, there is shown a computer 10 in which the present invention can be utilised. The computer 10 may have an associated monitor 11, keyboard 12 and printer or plotter 14. The computer 10 has a cover 15 which cooperates with a chassis 19 in defining an enclosed, shielded volume for receiving electrically powered data processing and storage components for processing and storing digital data, as shown in Fig. 2. At least certain of these components are mounted on a multilayer planar 20 or motherboard which is mounted on the chassis 19 and provides a means for electrically interconnecting the components of the computer 10 including those identified above and such other associated elements as floppy disk drives, various forms of direct access storage devices, accessory cards or boards, and the like.

The chassis 19 has a base and a rear panel and defines at least one open bay for receiving a data storage device such as a disk drive for magnetic or optical disks, a tape backup drive, or the like. In the illustrated form, an upper bay 22 is adapted to receive peripheral drives of a first size (such as those known as 3.5 inch drives). A floppy disk drive, a removable media direct access storage device capable of receiving a diskette inserted thereinto and using the diskette to receive, store and deliver data as is generally known, may be provided in the upper bay 22.

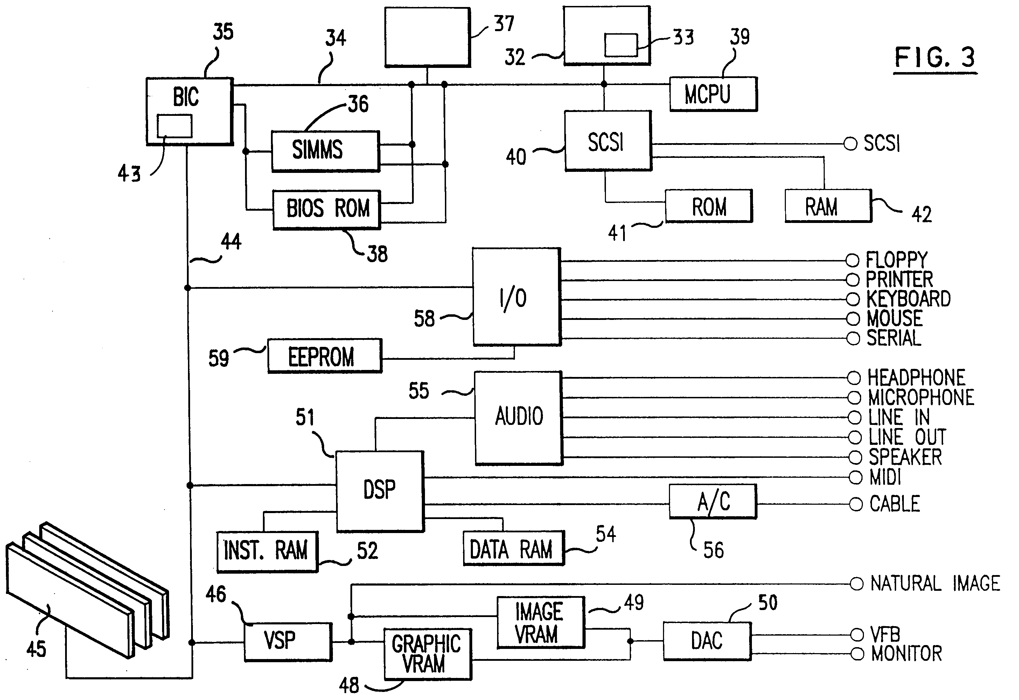

Prior to relating the above structure to the present invention, a summary of the operation in general of the personal computer system 10 may merit review. Referring to Fig. 3, there is shown a block diagram of a computer system illustrating the various components thereof, including components mounted on the planar 20 and the connection of the planar to the I/O slots and other hardware of the personal computer system. Connected to the planar is the system processor 32 which can optionally have a direct slave interface internal L1 cache 33. The CPU 32 is connected by a high speed CPU local bus 34 to a bus interface control unit 35, to volatile random access memory (RAM) 36 (main memory) here shown as Single Inline Memory Modules (SIMMS) and to BIOS ROM 38 in which are stored instructions for basic input/output operations to the CPU 32. The BIOS ROM 38 includes the BIOS that is used to interface between the I/O devices and the operating system of the microprocessor 32. Instructions stored in ROM 38 can be copied into RAM 36 to decrease the execution time of BIOS.

The local bus 34 (comprising data, address and control components) also provides for the connection of the system processor 32 with a direct slave interface L2 cache 37. In addition, a numeric or math coprocessor (MCPU) 39 and a Small Computer Systems Interface (SCSI) controller 40 are connected to the CPU 32 by the local bus 34. The SCSI controller 40 may, as is known to persons skilled in the arts of computer design and operation, be connected or connectable with Read Only Memory (ROM) 41, RAM 42, and suitable external devices of a variety of types as facilitated by the I/O connection indicated to the right of the Figure. The SCSI controller 40 functions as a storage controller in controlling storage memory devices such as fixed or removable media electromagnetic storage devices (also known as hard and floppy disk drives), electro-optical, tape and other storage devices.

The bus interface controller (BIC) 35 includes a store-in direct slave interface cache 43. The BIC 35 couples the CPU local bus 34 with an I/O bus 44 and functions as a protocol translator, memory controller and DMA controller among other functions. By means of the bus 44, the BIC 35 is coupled with an optional feature bus such as a Micro Channel bus having a plurality of I/O slots for receiving Micro Channel adapter cards 45 which may be further connected to an I/O device or memory (not shown). The I/O bus 44 includes address, data, and control components. The I/O bus 44 may be configured to bus specifications other than the Micro Channel specification.

Coupled along the I/O bus 44 are a variety of I/O components such as a video signal processor (VSP) 46 which is associated with video RAM (VRAM) for storing character based information (indicated at 48) and for storing graphic or image based information (indicated at 49). Video signals exchanged with the processor 46 may be passed through a Digital to Analog Converter (DAC) 50 to a monitor or other display device. Provision is also made for connecting the VSP 46 directly with what is here referred to as a natural image input/output, which may take the form of a video recorder/player, camera, etc. The I/O bus 44 is also coupled with a Digital Signal Processor (DSP) 51 which has associated instruction RAM 52 and data RAM 54 available to store software instructions for the processing of signals by the DSP 51 and data involved in such processing. The DSP 51 provides for processing of audio inputs and outputs by the provision of an audio controller 55, and for handling of other signals by provision of an analog interface controller 56. Lastly, the I/O bus 44 is coupled with an input/output controller 58 having associated Electrical Erasable Programmable Read Only Memory (EEPROM) 59 by which inputs and outputs are exchanged with conventional peripherals including floppy disk drives, a printer or plotter 14, keyboard 12, a mouse or pointing device (not shown), and by means of a serial port.

A personal computer can support multiple bus masters or bus master devices. As here used, a "master" is a processor or any circuit designed to gain control over a bus and drive address, data and control signals on the bus. Having such capability enables a master device to transfer information between system memory and other devices.

It has been proposed that masters be divided among three types -- system master (usually the CPU), DMA controller, and bus master. The system master controls and manages the system configuration. It is usually the default master in the system. The default master owns the bus when no other master requires it. A DMA master is a special type of master which transfers data between DMA slaves and memory slaves, and does not arbitrate for the bus but services the DMA slave that is the arbitrator. As here used, a bus master arbitrates for use of the bus and supports information transfers with an I/O slave or memory slave.

What makes a device a "bus master" can be confusing, as bus masters do not necessarily require a processor. Also, a bus master may be called on to respond as a slave when accessed by another bus master. A bus master is distinguished by the capability of gaining control of the bus through arbitration and controlling the execution of a defined bus cycle. Generally, there are three types of bus masters: full function, special function controllers, and programmable special function controllers. The fundamental differences among them are degrees of flexibility, function and cost. The full function bus master is the most flexible, has the most function, and costs most. Typically, a full function bus master will have its own programmable CPU and be capable of controlling all system resources, including operating system software. Special function controllers have the least flexibility, function and cost. Typically, a special function controller will use logic circuits but no CPU to perform a specific function while requiring little or no assistance from other masters. Programmable special function controllers span the range between the other two. The fundamental difference between special function and programmable special function controllers is the ability to modify the function and/or execution characteristics of the bus master. Such modification can be accomplished through use of processing units or through settable registers.

Within the defintions here given, the CPU 32, MCPU 39, and SCSI controller 40 may all function as masters directly coupled to or on the local bus 34, while the I/O controller 58, DSP 51, VSP 46 and possibly accessory boards 45 mounted in the Micro Channel slots may all function as masters directly coupled to or on the input/ouput bus 44.

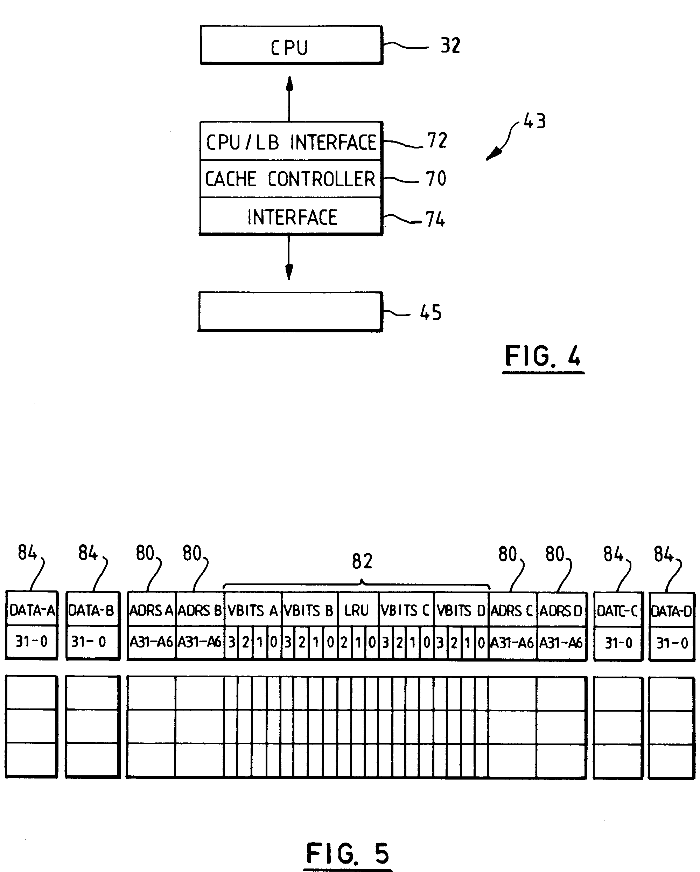

Referring to Fig. 4, there is shown a general block diagram of one embodiment of the direct slave interface cache 43 of the present invention. The cache 43 is incorporated within the BIC 35 and includes a cache controller 70, a local bus (LB) interface 72 and an input/output (I/O) interface 74. The cache 43 is coupled to the CPU 32 by the LB interface 72. In addition, the cache 43 is coupled directly to I/O devices by the I/O interface 74. Thus, the cache 43 has two interfaces for bidirectionally tranferring data directly to a local bus master or an I/O bus master via the LB and I/O buses respectively. It should be understood that the present invention is not limited to an interface 74 to the I/O bus 44 but can be an interface to any type of secondary bus coupled to the I/O bus 44 such as, for example, the Micro Channel bus using Micro Channel adapter cards 45, Peripheral Component Interconnect (PCI) bus (not shown) or Video Electronics Standards Association (VESA) bus (not shown).

A general overview of the operation and advantages of the cache 43 will be described in connection with Fig. 3. The cache 43 is a store-in cache which conventionally includes a snooping capability. The cache 43 constantly checks requests made by devices other than the CPU 32 that wish to access main memory 36 to see if the requested address is in the cache 43. When an I/O device such as, for example, DSP 51 gains access to the I/O bus 44 and drives a cycle to read a byte(s) in main memory 36, the cache 43 will detect such a read request while snooping and check to see if the data is duplicated in the cache 43. If the byte(s) addressed by the DSP 51 is in the cache 43, a read snoop hit occurs and only the byte(s) addressed are transferred (read) directly from the cache 43 to the DSP 51 without the need to access the main memory 36.

If the DSP 51 issues a write request and the byte(s) addressed is in the cache 43 (write snoop hit), the cache 43 will invalidate only the byte(s) corresponding to the address supplied by DSP 51. Next, the BIC 35 can write directly to memory 36 without the need for the cache 43 to first cast out the data to the main memory 36. When a request is made by the DSP 51 for an address that is not in the cache 43, the cache 43 is inactive and the read or write snoop miss cycle is conventionally performed in the main memory 36.

Turning now to Fig. 5, there is shown the control and directory organization of the dual bus interface cache 43. The cache 43 is a four way set associative cache. Cache data is stored in a static random access memory (SRAM) array 84 comprised of four banks (A, B, C, D) each of which being 32 bits (one word) wide and 32 bits deep for a total of 512 bytes. Although the present invention is not limited to such a sized cache array, the remaining explanation will be based upon these numbers for illustrative purposes.

The most significant address bits corresponding to each entry in the four banks of data is saved in four 19 bit groups for a 32 x 19 TAG array 80 for each bank. Each byte for each address location in each bank has a corresponding valid bit such that if a particular byte is present in the SRAM array 84 then the valid bit for that byte is on, and if a particular byte is not present in the SRAM array 84, then the valid bit for that byte is off. Since there are four bytes in each address location there are four valid bits associated with each address for a total of 16 valid bits. Three least recently used (LRU) bits are used to indicate which of the four banks of data will be replaced by a new entry when the cache is full in accordance with a conventional LRU algorithm. The three LRU bits and the 16 valid bits comprise a 19 x 19 state or LRU/VALID array 82.

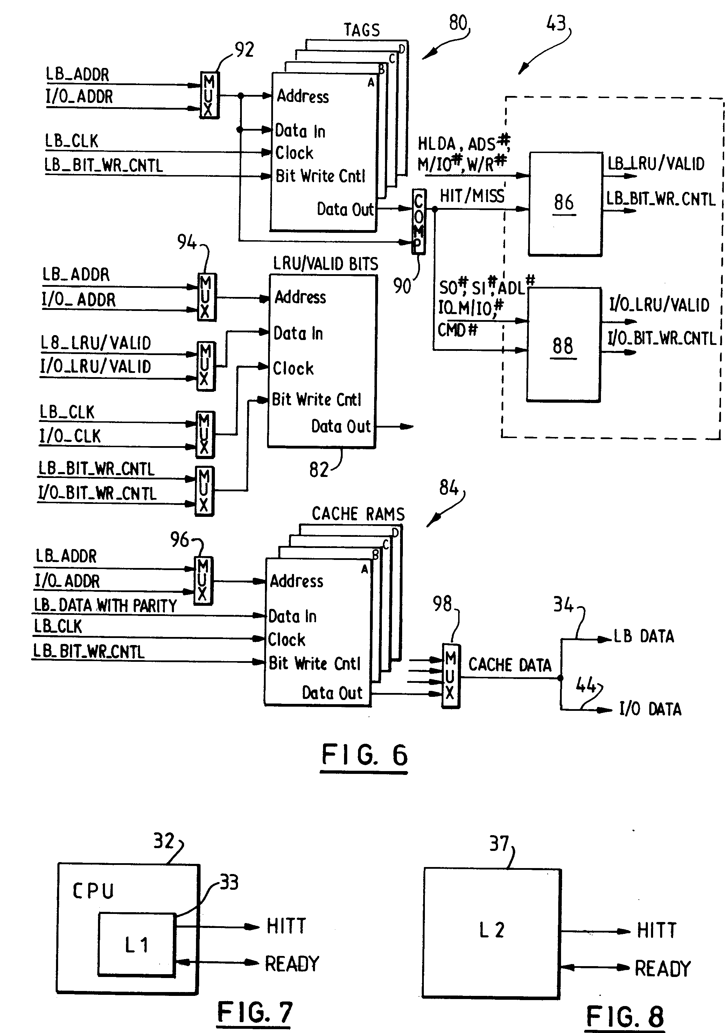

Referring to Fig. 6, there is shown a schematic diagram of the cache 43 of the present invention. The TAG array 80, state array 82 and SRAM array 84 each have four inputs and one output. The four inputs include an Address, Data In, Clock and Bit Write Control input. A LB cache controller 86 receives a plurality of inputs including HLDA, ADS#, M/IO#, W/R#, and HIT/MISS (internal). HLDA is a control signal used to distinguish a local bus cycle initiated by the CPU 32 from a local bus cycle initiated by a local bus master (other than the CPU 32). ADS#, M/IO# and W/R# are control signals which are driven by the local bus master in control of the local bus 34 when HLDA is high. The ADS# line is the local bus address status indicator, and it is driven by the local bus master to indicate that a valid local bus cycle is available. If there is a valid local bus cycle (ADS# low) then M/IO# indicates whether the valid LB cycle is either a memory (M/IO# high) or an I/O (M/IO# low) cycle. W/R# is a local bus master driven cycle definition signal used to indicate a Write (W/R# low) or a Read (W/R# high) cycle.

A comparator 90 is used to compare the address provided to the cache 43 by the I/O or LB bus master to the tags in the TAG array 80. Accordingly, if the address is present a hit is declared by comparator 90 by driving HIT/MISS active--low. When the address is not present in the TAG array 80, the comparator 90 declares a miss by driving HIT/MISS high. The TAG array 80, LRU/VALID array 82 and the SRAM array 84 receive the LB or I/O address via multiplexers 92, 94 and 96 respectively depending on whether the local bus master or the I/O bus master is driving the bus cycle.

An I/O cache controller 88 also receives the output of comparator 90 (HIT/MISS) to determine if a requested address location resides in the cache 43. The I/O cache controller 88 also receives inputs S0#, S1#, ADL#, I/O_M/IO# and CMD#. Each of these control signals is driven by an I/O bus master in control of the I/O bus 44. S0#, S1#, and I/O_M/IO# are decoded by the I/O cache controller 88 to determine whether the I/O bus cycle is either a memory read (S0# high, S1# high, I/O_M/IO# high), memory write (S0# high, S1# low, I/O_M/IO# high), I/O read (S0# high, S1# high, I/O_M/IO# low), I/O write (S0# high, S1# low, I/O_M/IO# low), or an interrupt acknowledge bus cycle (S0# low). The signal CMD# is active low and is used to define when data is valid. ADL# is used to indicate a valid address and its status.

The LB and I/O cache controllers 86, 88 each generate two output signals. The LB_LRU/VALID and I/O_LRU/VALID outputs are used to indicate which bytes of a selected word are valid and the bytes that will be replaced by the LRU algorithm when necessary. These outputs along with LB_BIT_WR_CNTL and I/O_BIT_WR_CNTL are inactive during a read hit and are used to invalidate the byte(s) of an address location during a write snoop hit from a LB or I/O bus master respectively.

In order to provide a complete understanding of the direct slave interface cache of the present invention a description of the operation thereof will be described hereinafter. As an illustrative example and referring to Figs. 3 and 6, the MCPU 39 and SCSI 40 are local bus masters coupled directly to the local bus 34 while the I/O controller 58, DSP 51, VSP 46 and possibly accessory boards 45 mounted in the MC slots may all function as I/O bus masters coupled directly to or on the I/O bus 44. While any appropriate microprocessor 32 can be used in this embodiment, one suitable microprocessor is the 80386 which is sold by INTEL. Any bus arbitration scheme can be utilized in the present invention such as that described in co-pending earlier filed United States Patent Application Serial No. 706,602, filed May 28, 1991 and owned in common with the present invention. This co-pending application is hereby incorporated by reference into the present description.

In operation, the direct slave interface cache 43 will be snooping on the I/O bus 44 as is conventionally done in a store-in-cache. (The details of such a snooping implementation is system dependent, not a part of the present invention and many variations are possible.) The cache 43 will watch the I/O bus 44 to make sure that any requests to access a location in main memory 36 is not present in the cache 43. For example, after an I/O bus master device such as I/O controller 58 gains control over the I/O bus 44 through arbitration, it can drive a read cycle. The I/O bus master 58 will place the address of the byte(s) at the memory location that it wishes to access on the I/O bus 44. The S0#, S1#, and I/O_M/IO# signals will be driven by the I/O bus master 58 to the appropriate levels to indicate that a valid I/O bus cycle is beginning and what type of operation is to be performed.

The I/O address will be multiplexed into the TAG array 80, LRU/VALID array 82 and SRAM array 84. This address will be compared to tags in TAG array 80 and a hit will be declared by comparator 90 if the address is present in cache 43. When there is a hit, the HIT/MISS signal will be asserted active and input to the I/O cache controller 88. Since this is a read cycle, the I/O_LRU/VALID output is not used and the I/O_BIT_WR_CNTR will be set to inactive. Since the address was presented to the SRAM array 84 by multiplexer 96 the byte(s) of data will be read out of the SRAM array 84 and multiplexed onto the I/O bus 44 by multiplexer 98. Thus, during a read snoop hit cycle initiated by the I/O bus master 58, the requested byte(s) are transferred directly from the cache 43 to the I/O bus master 58 without cache data cast out.

When the bus cycle initiated by the I/O bus master 58 is a write cycle, the I/O cache controller 88 will set the I/O_BIT_WR_CNTL signal LOW--active and will set the valid bits for the addressed byte(s) on I/O_LRU/VALID to invalid. The LRU bits are not affected as these bits are set from the LB side by the LB masters. These signals will then be received by the LRU/VALID array 82 and the valid bits for the byte(s) corresponding to the address supplied by the I/O bus master will be changed to invalid to invalidate the selected byte(s) in the cache 43. Next, the BIC 35 will write the new data to main memory 36. Thus, during a write snoop hit, the cache byte(s) are invalidated without cache data cast out. This is a significant improvement over conventional caches which must invalidate and cast out an entire line of data during a write snoop hit even when less than all of the bytes in the line of data are being addressed by the I/O bus master 58.

Similarly, when a LB bus master other than CPU 32 such as, for example, MCPU 39 wishes to perform a read operation it will place the address of the memory location it wishes to read on the local bus 34 after it gains contol of local bus 34 through arbitration. The ADS# and M/IO# signals will be driven by the MCPU 39 to the appropriate levels to indicate that a valid local bus cycle is beginning and what type of operation is to be performed. The LB address will be multiplexed into the TAG array 80, LRU/VALID array 82 and the cache RAMS 84 by multiplexers 92, 94 and 96 respectively. When the address is present in the TAG array 80, the comparator 90 will drive HIT/MISS active. This signal will then be input to the LB cache controller 86. The LB_LRU/VALID output does nothing and the LB_BIT_WR_CNTR will be set to inactive. Since the address is presented to the cache RAMS 84 the data (byte(s)) will simply be transferred directly from the cache RAMS 84 to the local bus 34 by multiplexer 98.

When a write cycle is initiated by the LB bus master 39 the LB cache controller 88 will set the LB_BIT_WR_CNTL signal LOW--active and will set the valid bits corresponding to the addressed byte(s) on LB_LRU/VALID to invalid. (The LRU bits will be set by the LB master according to a conventional LRU algorithm.) These signals will then be received by the LRU/VALID array 82 and the valid bits for the address selected will be changed to invalid to invalidate the selected byte(s) in the cache 43. Next, the BIC 35 will write the new data to the corresponding byte(s) in main memory 36 without waiting for the cache 43 to first cast out the data.

If the I/O bus master 58 or the LB bus master 39 requests a read or a write operation to be performed at a memory location that is not in the cache 43 (read or write snoop miss), HIT/MISS will be driven inactive high by comparator 90. The cache 43 will not respond to the cycle and the read or write operation is then conventionally performed directly in main memory 36.

Referring now to Fig. 7 and 8, there are shown block diagrams of alternative embodiments of the present invention wherein the CPU's internal cache 33 (Fig, 7) or the external L2 cache 37 (Fig. 8) can be a direct slave interface cache. The caches 33 and 37 have the following modifications as compared to conventional L1 and L2 caches in order to provide a direct slave interface during a read snoop hit cycle: 1) drive an output control signal HITT (active low) to indicate that valid data is in the cache and prevent any other memory slaves from responding to the bus cycle, and 2) drive the bidirectional READY signal (active low) to terminate the read cycle. In contrast to a conventional L1 or L2 cache (READY is received as input only), the L1 and L2 caches 33 and 37 of the present invention will have a bidirectional READY signal so that it may drive this signal and act as a memory slave. In addition, in contrast to conventional L1 and L2 caches, the caches 33 and 37 also provide a direct slave interface during a write snoop hit cycle by invalidating only the byte(s) in the cache that correspond to the addressed memory location(s) without casting out the data to main memory.

Since the direct slave interface L1 and L2 caches 33, 37 of the present invention are identical in operation, the description below will be directed to the L2 cache 37 but it should be understood that it is equally applicable to the L1 cache 33. Of course it should be understood by those skilled in the art of the present invention that the L1 cache is typically much smaller than the L2 cache. In addition, the L1 cache of the present invention can be implemented in any microprocessor having an internal cache that requires data cast out when a read snoop hit or a write snoop hit occurs in the internal cache such as, for example, INTEL's P5 and P24T Pentium microprocessors.

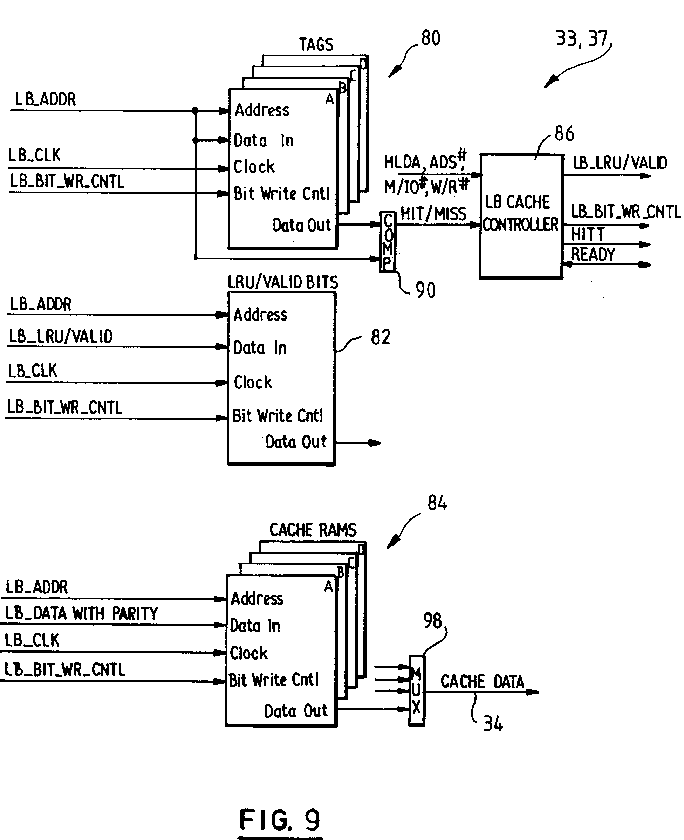

Turning now to Fig. 9, the L2 cache 37 includes all the elements of the cache 43 shown in Fig. 6 except for the I/O interface and all like elements have been labeled with the same reference numerals. More specifically, cache 37 does not include an I/O cache controller nor any signals relating thereto. In addition, multiplexers 92, 94 and 96 have been removed since the cache 37 is only coupled to an address supplied on the local bus 34. The control and directory oraganization of the L2 cache 37 can be identical to that described above with regard to cache 43.

Referring to Figs. 3 and 9, when a LB bus master other than CPU 32, such as, for example, SCSI 40 initiates a read cycle to a particular memory location in the main memroy 36, it will place the address of that location on local bus 34. The ADS#, M/IO# and W/R# signals will be driven by the SCSI 40 to the appropriate levels when HLDA is high as described above. The cache 37 will detect the read cycle while snooping. The LB address will be sent into the TAG array 80, LRU/VALID array 82 and the cache RAMS 84 over local bus 34. HIT/MISS will be asserted by comparator 90 when the address is present in the cache 37 and the valid bit for the byte(s) at this address is set. This signal will then be input to the LB cache controller 86.

Next, the LB cache controller 86 will drive the HITT signal active-low on the control portion of local bus 34. This signal will be received by other memory slaves such as the L1 cache 33 and the BIC memory controller (not shown) to indicate to these devices that they should not respond to the cycle since the data is in the L2 cache 37. Since it is a read cycle the LB_LRU/VALID output does nothing and the LB_BIT_WR_CNTR will be set to inactive. Since the address is presented to the cache RAMS 84 the data (byte(s)) will simply be transferred out of the cache RAMS 84 and placed on the local bus 34. Simultaneously with the data transfer, the cache controller 86 will drive the READY signal on the control portion of local bus 34 to indicate the end of the cycle. Thus, the cache 37 operates as a memory slave to the local bus master 40.

When the operation to be performed is a write operation, the LB cache controller 86 will set the LB_BIT_WR_CNTL signal low and will set the valid bits on LB_LRU/VALID to invalid. These signals will then be received by the LRU/VALID array 82 and the valid bits for the byte(s) selected will be changed to invalid to invalidate the byte(s) in the cache 37 corresponding to the addressed main memory location. The BIC 35 can then write the new data to main memory 36. No cache data cast out takes place during this cycle. The cache 37 does not cast out its data because each byte(s) invalidated in the cache 37 corresponds to each byte(s) addressed by the LB bus master 40. This is a significant improvement over conventional caches which must invalidate and cast out an entire line of data during a write snoop hit even when less than all of the bytes in the line of data are being addressed by the LB bus master.

With regard to a cycle initiated by an I/O bus master such as, for example, DSP 51, it will gain control over the I/O bus 44 in accordance with the arbitration procedures of the BIC 35. The I/O bus master 51 will then drive control signals ADS#, M/IO# and W/R# to the appropriate levels when HLDA is high as discussed above to initiate a bus cycle to read a byte(s) of data from a memory location in main memory 36. The L2 cache 37 will detect this request while snooping. When the byte(s) of data is also present in the SRAM array 84 and a corresponding valid bit is set the following events will take place. The comparator 90 will compare the memory address on local bus 34 with tags in TAG array 80 and drive the HIT/MISS signal active to indicate a valid cache access. The controller 86 will then drive the HITT signal in order to prevent any other memory slaves (L1 cache 33 and BIC 35 memory controller) from responding. The data byte(s) will be placed on local bus 34 along with the READY signal and transferred to the I/O bus 44 by the BIC 35 and then to the I/O bus master 51.

When the I/O bus master 51 initiates a write cycle to a memory location which is in the L2 cache 37 with valid data, the LB cache controller 86 will set the LB_BIT_WR_CNTL signal Low--active and will set the valid bits on LB_LRU/VALID to invalid. These signals will then be received by the LRU/VALID array 82 and the valid bits for the byte(s) addressed will be changed to invalid to invalidate the selected address location in the cache 37. Next, the BIC 35 will write the new data to main memory 36 without the added delay associated with cache data cast out. No cache data cast out takes place during this cycle because each byte(s) invalidated in the cache 37 corresponds to each byte(s) addressed by the I/O bus master 51.

If the LB bus master 40 or the I/O bus master 51 requests a read or a write operation to be performed at a memory location that is not in the L2 cache 37, HIT/MISS will be driven inactive high by comparator 90. The cache 37 will not respond to the cycle and the read or write operation is then conventionally performed directly in main memory 36.

By eliminating the extra cast out step, the direct slave interface caches 33, 37 and 43 of the present invention can support a Micro Channel data streaming protocol when the I/O bus 44 is coupled to the optional Micro Channel bus. The Micro Channel requires that an address be defined before allowing a word to be transferred over its bus. Two cycles are thus required for each transfer of one word--one for setting up the address and one for moving the data. Usually, an entire block of data is moved at a time, one word after another. In such situations, the address for each byte becomes redundant after the first transfer is completed. The Micro Channel data streaming protocol cuts the time to transfer a word in half by eliminating every other cycle (the addressing cycle) of a transfer of a block of sequential data words. Consequently, for transfers of blocks of data, streaming data mode effectively doubles the transfer rate.

In summary, the direct slave interface caches 33, 37 and 43 of the present invention have the significant advantage over prior art SI caches in that the step to cast out data to main memory during a main memory read snoop hit or a main memory write snoop hit is eliminated. By eliminating the extra cast out step, the direct slave interface caches significantly increase the operation speed of a personal computer system utilizing such caches and is fast enough to support Micro Channel data streaming protocol.

A further embodiment provides a computer system comprising: a local bus, an input/output bus, a microprocessor coupled to said local bus, a bus master device coupled to one of said input/output and said local buses, a main memory coupled to said local bus, a bus interface controller coupled directly to said local bus and directly to said input/output bus for providing communications between said local bus and said input/output bus, a cache coupled directly to said local bus being operative to communicate with said bus master device, said cache including means for performing a first operation in relation to a memory location in said cache without casting out said data in response to a bus cycle driven by said one of said bus master devices to a specified specified operation in relation to the corresponding memory location in said main memory.

A still further embodiment provides the system further comprising a bus master device coupled directly to said local bus, said cache being operative to communicate with any one of said bus master devices and perform said first operation in relation to a memory location in said cache to one of said bus master devices in response to a bus cycle driven by said one of said bus master devices to said specified operation in relation to the corresponding memory location in said main memory.

A yet further embodiment provides a computer system wherein said furst operation comprises invalidating data at said memory location, and said specified operation is a write.

## Claims

1. A computer system comprising:
a local bus,
an input/output bus,
a microprocessor coupled to said local bus,
a bus master device coupled to one of said input/output and said local buses,
a main memory coupled to said local bus,
a bus interface controller coupled directly to said local bus and directly to said input/output bus for providing communications between said local bus and said input/output bus,
a cache coupled directly to said local bus and being operative to selectively communicate with said bus master device,
said cache including means for directly transferring data from a memory location in said cache to said bus master device without casting out said data in response to a bus cycle driven by said bus master device to read the data from the corresponding memory location in said main memory.

2. The system according to claim 1, further comprising a bus master device coupled directly to said local bus, said cache being operative to communicate with any one of said bus master devices and transfer data from a memory location in said cache to one of said bus master devices in response to a bus cycle driven by said one of said bus master devices to read the data from a corresponding memory location in said main memory.

3. The system according to any preceding claim, wherein said cache further includes means for invalidating data at a memory location in said cache without casting out said data in response to a bus cycle driven by said one of said bus master devices to write to the corresponding memory location in said main memory.

4. A computer system comprising:
a local bus,
an input/output bus,
a microprocessor coupled to said local bus,
a bus master device coupled to one of said input/output and said local buses,
a main memory coupled to said local bus,
a bus interface controller coupled directly to said local bus and directly to said input/output bus for providing communications between said local bus and said input/output bus,
a cache coupled directly to said local bus and being operative to selectively communicate with said bus master device,
said cache including means for invalidating data at a memory location in said cache without casting out said data in response to a bus cycle driven by said one of said bus master devices to write to the corresponding memory location in said main memory.

5. The system according to claim 4, further comprising a bus master device coupled directly to said local bus, said cache being operative to communicate with any one of said bus master devices and invalidate the data at a memory location in said cache without casting out said data in response to a bus cycle driven by said one of said bus master devices to write to the corresponding memory location in said main memory.

6. The system according to either of claims 4 or 5, wherein said cache includes tag array means, valid array means and memory array means each of which being selectively coupled to said local bus or said input/output bus, said memory array means being comprised of a plurality of data bytes, said valid array means being comprised of a plurality of valid bits with each valid bit being associated with each one of said bytes of data within said memory array means.

7. The system according to any of claims 3 to 6, wherein said invalidating means comprises:
local bus cache control means coupled to said valid array means for providing a signal to said valid array to invalidate said data in said cache when said one of said bus master devices is said bus master device coupled to said local bus, and
input/output cache control means coupled to said valid array means for providing a signal to said valid array to invalidate said data in said cache when said one of said bus master devices is said bus master device coupled to said input/output bus.

8. The system according to any preceding claim, wherein said bus master device is coupled to said input/output bus.

9. The system according to any preceding claim, wherein said cache includes tag array means, valid array means and memory array means each of which being coupled to said local bus or said input/output bus, said memory array means being comprised of a plurality of data bytes, said valid array means being comprised of a plurality of valid bits with each valid bit being associated with each one of said bytes of data within said memory array means, said byte being the basic unit of data invalidated by said cache.

10. The system according to any preceding claim, wherein said input/output bus is a Micro Channel bus.

11. The system according to any preceding claim, wherien said main memory comprises:
volatile memory coupled directly to said local bus for volatile storage of data, and
storage memory devices coupled directly to said local bus for nonvolatile storage of data.

12. The system according to any preceding claim, wherein said bus master device coupled to said input/output bus includes:
an input/output controller coupled directly to said input/output bus,
a digital signal processor coupled directly to said input/output bus, and
a video signal processor coupled directly to said input/output bus.

13. The system according to any preceding claim, wherein said bus master device coupled to said local bus includes:
a numeric co-processor coupled directly to said local bus, and
a storage controller coupled directly to said local bus and to said storage memory devices for regulating communications with said storage memory devices.

14. A computer system as claimed in any preceding claim, wherein said bus interface includes said cache, and said cache is coupled to said input/output bus for receiving address information from said buses.
